# EUROPEAN PATENT APPLICATION

(11) **EP 2 177 751 A2**
(43) Date of publication of application: **21.04.2010**
(21) Application number: 09172618.2
(22) Date of filing: 09.10.2009
(51) Int. Cl.: F03D 1/00, F03D 9/02

(54) **Wind turbine tower foundation containing power and control equipment**

(30) Priority: 16.10.2008 US 252661
(71) Applicant: General Electric Company, Schenectady, NY 12345 (US)
(72) Inventor: Scholte-Wassink, Hartmut A., 49828 Lage (DE)
(74) Representative: Bedford, Grant Richard

(57) **Abstract**

A tower foundation (250) is provided having at least one cavity (220) formed within the foundation. At least a portion of the cavity is located below ground level, and the cavity contains electrical equipment (240).

## Description

This invention relates generally to tower foundations. In particular but not limited thereto, the present invention relates to a tower foundation for a wind turbine where the foundation includes the power and control equipment.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in diameter). Blades on these rotors transform wind energy into a rotational torque or force that drives one or more generators that may be rotationally coupled to the rotor through a gearbox. The gearbox steps up the inherently low rotational speed of the turbine rotor for the generator to efficiently convert mechanical energy to electrical energy, which is fed into a utility grid.

Several technical installations require a tower or a mast to which the installation is mounted. Non-limiting examples of such installations are wind turbines, antenna towers used in broadcasting or mobile telecommunication, pylons used in bridge work, or power poles. Typically, the tower is made of steel and must be connected to a foundation made of reinforced concrete. In these cases, the typical technical solution is to provide a large, solid reinforced concrete foundation at the bottom of the tower. In typical applications the tower foundation extends about 12 meters below the ground level, and can be about 18 meters or more in diameter.

According to one aspect of the present invention, a tower foundation is provided having at least one cavity formed within the foundation. At least a portion of the cavity is located below ground level, and the cavity contains electrical equipment.

Various aspects and embodiments of the present invention will now be described in connection with the accompanying drawings, in which:
Fig. 1 shows a wind turbine to which the embodiments of the present invention can be applied.
Fig. 2 is a cross-sectional view of a tower foundation according to one embodiment of the present invention.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

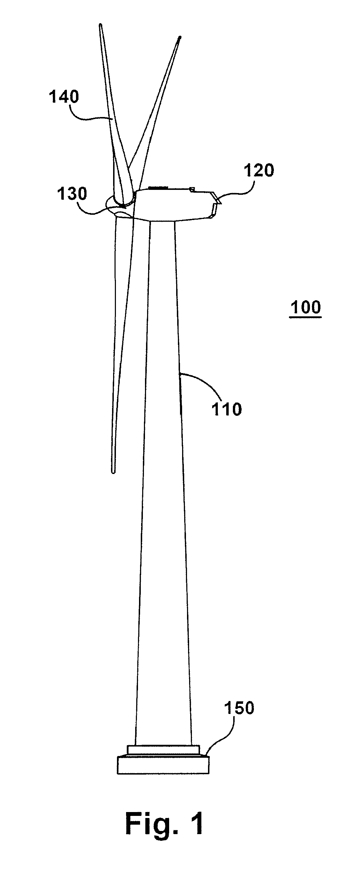

Fig. 1 shows a wind turbine to which the embodiments of the present invention can be advantageously applied. However, it should be understood that the present invention is not limited or restricted to wind turbines but can also be applied to tower structures used in other technical fields. In particular, the various embodiments of the present invention may also be applied to antenna towers used in broadcasting or mobile telecommunication or to pylons used in bridge work. Therefore, although the aspects of the invention will be exemplified with reference to a wind turbine, the scope of the present invention shall not be limited thereto.

The wind turbine 100 shown in Fig. 1 comprises a tower 110 bearing a nacelle 120 on its top end. A rotor including a rotor hub 130 and rotor blades 140 is attached to one side of the nacelle 120. The tower 110 is mounted on a foundation 150. Typically, the tower foundation 150 is made of reinforced concrete.

The conventional foundation 150 is typically a solid mass of reinforced concrete. The power and control equipment (e.g., power transformer, inverter, switch cabinets, etc.) are often housed outside the tower in a separate enclosure or inside the tower at ground level. When high voltage equipment is stored inside the tower at ground level a great deal of caution must be exercised by the maintenance personnel. The tower is large inside at the base, but quickly becomes crowded with the high voltage power and control equipment. There is not a great deal of room for the maintenance personnel at the base of the tower when the power and control equipment is housed therein. Some of this equipment (e.g., the power transformer) can be hazardous if contacted improperly. Accordingly, it would be advantageous to decrease the risk of harm to maintenance personnel while keeping the power and control equipment within turbine 100.

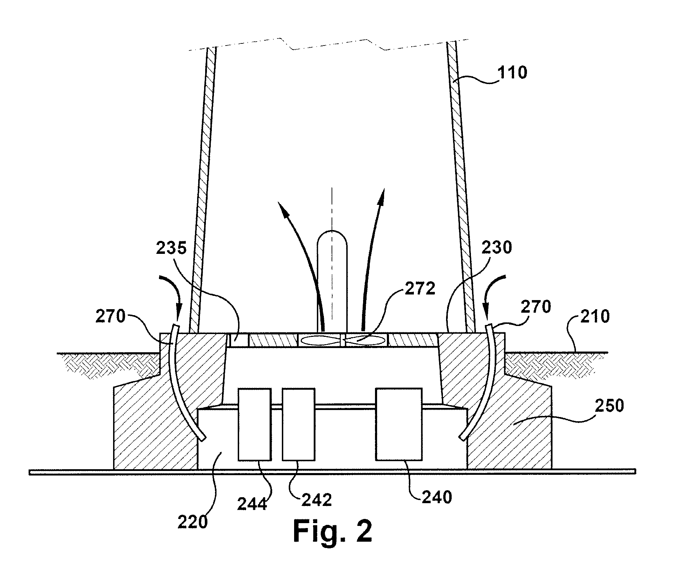

Fig. 2 is a cross-sectional view of a tower foundation, according to one embodiment of the present invention, where the power and control equipment can be housed within the tower foundation. The tower 110 sits on top of foundation 250. The foundation 250 is located so that a majority of the foundation is below ground level 210. A cavity 220 is formed within the foundation 250 so that a portion of foundation 250 is hollow. Cavity 220 is formed substantially below ground level 210 and sized to accommodate maintenance personnel and power and/or control equipment (e.g., power transformer, inverter, low voltage distribution system, medium voltage distribution system, high voltage distribution system, switch cabinets, etc.). It is to be understood that cavity 220 could be formed of one or more "rooms", or be partitioned into multiple sections.

In most known wind turbines, an entry door is accessible via a ladder or stairs near ground level. According to aspects of the present invention, maintenance personnel can access the tower via the conventional arrangement, but also enter the tower without danger of coming into contact with hazardous equipment or the power and control equipment. The floor level of the entry point is illustrated at 230. An access port or hatch 235 can be provided in floor 230. Alternatively access to basement or cavity 220 could be provided via a staircase and/or doorway (not shown).

The power transformer 240, voltage distribution system 242 and control panel 244 can be housed within cavity 220. Additional equipment may also be housed in cavity 220 or some of the equipment may be moved into the base of tower 110 (e.g., control panel 244). One advantage of the present invention is that hazardous equipment can be located in a safer position.

The basement or cavity 220 can be cooled or heated by a variety of means. In one embodiment, ductwork 270 can be routed from the cavity 220 up to the interior or exterior of tower 110. Suitable filters can be provided at the entry of ductwork 270 to prevent particulate matter or water from entering the cavity 220. Air can be drawn in through ductwork 270 by one or more fans 272. The fan 272 can be configured to exhaust air from cavity 220 into the base of tower 110 or to the exterior of the tower.

The tower basement or cavity 220 may also be heated or cooled by other means as well, such as a geothermal system arranged near wind turbine 100. In the geothermal example, a heat exchanger (not shown) could be placed in cavity 220 and suitable piping could be connected to the power and control equipment. Piping could be routed from the heat exchanger down into the surrounding soil to complete the geothermal system. In additional embodiments, the geothermal heating and/or cooling system could be of the open loop or closed loop type. The temperature of the cavity will also be more consistent, due to its subterranean nature, and this reduces the magnitude of the thermal cycles in the surrounding environment. The electrical equipment will last longer in this environment of more consistent temperatures and reduced thermal cycles. The environment in cavity 220, as compared to the interior of tower 110, will be cooler in the warmer seasons (e.g. summer) and warmer in colder seasons (e.g., winter). As can be seen, there are many benefits to storing electrical equipment in the basement or cavity 220 of foundation 250.

In additional aspects of the present invention, separate zones can be created for housing different types of equipment. A first zone could be created above floor 230 for non-hazardous equipment (e.g., the control panel). A second zone could be created in cavity 220 for medium risk equipment (e.g., low voltage distribution system), and a third zone could be created in cavity 220 for more hazardous equipment (e.g., power transformer). The first zone is separated from the second and third zones via floor 230. The second and third zones may be separated from each other via a partition or wall within cavity 220, or be spaced apart from each other and visual indicia may be used to indicate the separation.

An additional benefit the present invention provides is that the sensitive electrical equipment can be isolated from the tower vibrations by being housed and mounted within cavity 220. Tower vibrations can cause accelerated aging of electrical components or equipment. The basement or cavity 220 can be used to insulate the sensitive equipment from undesired vibrations. To provide even further vibration isolation, the equipment can be placed on vibration absorbing mounts in cavity 220.

The storage of power and control equipment in the cavity 220 of foundation 250 also provides a more secure storage location. The main entry door of tower 110 provides a first barrier and the access door 235 provides a second barrier to the equipment in cavity 220.

If desired, dehumidifying equipment can be included within the cavity 220 or in the ventilation system of 270 and 272. In very humid environments (e.g., coastal or tropical regions) this may be a desired addition.

Additional equipment could also be stored within cavity 220. For example, power storage devices could be located within cavity 220 for storage of excess or off-peak power generation. The power storage devices could be comprised of batteries (e.g. sodium-sulfur batteries), massive electricity storage (MES) devices, compressed air storage, capacitors, and other suitable devices or systems. Grid connect equipment could also be housed within foundation 250.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A tower foundation, comprising:
   at least one cavity formed within said foundation, at least a portion of said at least one cavity located below ground level; and
   electrical equipment contained within said at least one cavity.
2. The tower foundation of clause 1, wherein said tower foundation supports the tower of a wind turbine.
3. The tower foundation of any preceding clause, wherein said electrical equipment comprises one or more of:
   a power transformer, voltage distribution equipment, inverter, and control panel.
4. The tower foundation of any preceding clause, further comprising an access door located near an upper portion of said at least one cavity, wherein said access door permits access to an interior of said at least one cavity.
5. The tower foundation of any preceding clause, further comprising:
   a ventilation system, said ventilation system provided to heat and/or cool said at least one cavity.
6. The tower foundation of any preceding clause, wherein said ventilation system comprises one or more fans.
7. The tower foundation of any preceding clause, wherein said ventilation system comprises a geothermal heating and/or cooling system.
8. The tower foundation of any preceding clause, wherein said at least one cavity comprises one or more partitions, said one or more partitions used to separate said electrical equipment.
9. The tower foundation of any preceding clause, further comprising:
   one or more vibration isolating mounts;
   wherein, said electrical equipment contained within said at least one cavity is supported by said one or more vibration isolating mounts.
10. The tower foundation of any preceding clause, further comprising:
   at least one energy storage device located within said at least one cavity;
   wherein said at least one energy storage device can be used to store power generated by said wind turbine.
11. The tower foundation of any preceding clause, wherein said at least one energy storage device is comprised of at least one or more of the following group:
   a battery, massive energy storage device, a capacitor, and compressed air storage.

## Claims

1. A tower foundation (250), comprising:
at least one cavity (220) formed within said foundation (250), at least a portion of said at least one cavity located below ground level (210); and
electrical equipment (240, 242, 244) contained within said at least one cavity.

2. The tower foundation (250) of claim 1, wherein said tower foundation supports the tower (110) of a wind turbine (100).

3. The tower foundation (250) of any preceding claim, wherein said electrical equipment comprises one or more of:
a power transformer (240), voltage distribution equipment (242), inverter, and control panel (244).

4. The tower foundation (250) of any preceding claim, further comprising an access door (235) located near an upper portion of said at least one cavity, wherein said access door permits access to an interior of said at least one cavity.

5. The tower foundation (250) of any preceding claim, further comprising:
a ventilation system (270, 272), said ventilation system provided to heat and/or cool said at least one cavity.

6. The tower foundation (250) of claim 5, wherein said ventilation system (270,272) comprises one or more fans (272).

7. The tower foundation (250) of claim 5 or claim 6, wherein said ventilation system (270,272) comprises a geothermal heating and/or cooling system.

8. The tower foundation (250) of any preceding claim, further comprising:
one or more vibration isolating mounts;
wherein, said electrical equipment contained within said at least one cavity is supported by said one or more vibration isolating mounts.

9. The tower foundation (250) of any preceding claim, further comprising:
at least one energy storage device located within said at least one cavity;
wherein said at least one energy storage device can be used to store power generated by said wind turbine.

10. The tower foundation (250) of claim 9, wherein said at least one energy storage device is comprised of at least one or more of the following group:
a battery, massive energy storage device, a capacitor, and compressed air storage.
